# EUROPEAN PATENT APPLICATION

(11) **EP 4 781 813 A1**
(43) Date of publication of application: **29.07.2026**
(21) Application number: 25220288.2
(22) Date of filing: 03.12.2025
(51) Int. Cl.: A01D 34/69, A01D 34/82

(54) **WALK-BEHIND POWER TOOL**

(30) Priority: 23.01.2025 CN 202510115893
(71) Applicant: Nanjing Chervon Industry Co., Ltd., Nanjing, Jiangsu 211106 (CN)
(72) Inventor: NIE, Zhusheng, Nanjing, Jiangsu 211106 (CN); ZHANG, Qi, Nanjing, Jiangsu 211106 (CN)
(74) Representative: Sun, Yiming

(57) **Abstract**

A walk-behind power tool includes: a body supported by a traveling assembly; a handle device, where the handle device is connected to the body and includes gripping handles for a user to hold, and at least part of the gripping handles are configured to be movable relative to the body; a sensing device configured to sense the amount of movement of the at least part of the gripping handles; and a control device connected to the sensing device. The control device is configured to control, according to the amount of movement, the walk-behind power tool to steer. The provided walk-behind power tool can be freely controlled to turn, which is flexible to operate and is safe, convenient, and comfortable to use.

## Description

### TECHNICAL FIELD

The present application relates to a power tool, for example, a walk-behind power tool.

### BACKGROUND

Walk-behind power tools play a very important role in daily production and life. An electric mower, as a walk-behind power tool, can trim a lawn or mow grass in a pasture. In a working process of the mower, a blade of the mower is driven by a motor to rotate rapidly so that grass is mown. To ensure the safety of an operator, a handle device is typically mounted at the rear of the mower, and the operator pushes the mower using the handle device to complete lawn maintenance or mowing work.

In the related art, when the mower turns, a user usually needs to press down the handle device so that the front end of the body of the mower is lifted and then the mower is turned. Such an operation manner is inconvenient for the user and also causes the interruption of the mowing work.

### SUMMARY

An object of the present application is to solve or at least alleviate part or all of the preceding problems. To this end, an object of the present application is to provide a walk-behind power tool that can be freely controlled to turn.

To achieve the preceding object, the present application adopts the technical solution below.

A walk-behind power tool includes: a body supported by a traveling assembly; a handle device, where the handle device is connected to the body and includes gripping handles for a user to hold, and at least part of the gripping handles are configured to be movable relative to the body; a sensing device configured to sense the amount of movement of the at least part of the gripping handles; and a control device connected to the sensing device. The control device is configured to control, according to the amount of movement, the walk-behind power tool to steer.

In some examples, the walk-behind power tool further includes a first motor and a second motor, where the control device controls movement of the first motor and movement of the second motor separately.

In some examples, the traveling assembly includes a first traveling wheel and a second traveling wheel, and the first motor and the second motor drive the first traveling wheel and the second traveling wheel, respectively; and a third motor and a working member are further included, and the third motor drives the working member to rotate.

In some examples, the sensing device is movable relative to the at least part of the gripping handles.

In some examples, each gripping handle of the at least part of the gripping handles includes a trigger portion, the trigger portion includes a trigger member, and the sensing device senses the amount of movement of the gripping handle by sensing the amount of movement of the trigger member.

In some examples, the sensing device includes a sensor.

In some examples, the handle device includes connecting rods, one end of each of the connecting rods is connected to the body, the other end of each of the connecting rods is connected to a respective one of the gripping handles, the connecting rods extend substantially along a first straight line, the at least part of the gripping handles are configured to rotate about a rotation axis, and the included angle between the rotation axis and the first straight line is greater than or equal to 0 degrees and less than or equal to 30 degrees.

In some examples, the handle device further includes a mounting housing, the mounting housing is fixedly connected to the connecting rods, and one end of each of the at least part of the gripping handles extends into the mounting housing and is rotatable about the rotation axis relative to the mounting housing.

In some examples, the handle device includes connecting rods, one end of each of the connecting rods is connected to the body, the other end of each of the connecting rods is connected to a respective one of the gripping handles, the connecting rods extend substantially along a first straight line, the at least part of the gripping handles are configured to rotate about a rotation axis, and the included angle between the rotation axis and the first straight line is greater than or equal to 60 degrees and less than or equal to 90 degrees.

In some examples, the handle device further includes a rotary assembly, a fixed end of each of the gripping handles is connected to one end of the rotary assembly, and another end of the rotary assembly is movably connected to a respective one of the connecting rods and is rotatable about the rotation axis relative to the respective connecting rod.

In some examples, the gripping handles include a first gripping handle and a second gripping handle, the sensing device includes a first sensing device and a second sensing device, the first sensing device senses the amount of movement of the first gripping handle, and the second sensing device senses the amount of movement of the second gripping handle.

In some examples, the gripping handles include a first gripping handle and a second gripping handle, and the sensing device senses the amount of movement of the first gripping handle or the amount of movement of the second gripping handle.

In some examples, the walk-behind power tool further includes a locking device, where each gripping handle of the at least part of the gripping handles has an unlocked state in which the gripping handle is movable relative to the body and a locked state in which the gripping handle is fixed relative to the body, and the locking device is configured to switch the gripping handle between the unlocked state and the locked state.

In some examples, the walk-behind power tool further includes a display screen disposed on the handle device.

In some examples, the display screen displays at least one of a steering direction and a steering angle.

The present application further provides a technical solution.

A walk-behind power tool includes: a body supported by a traveling assembly; a sensing device configured to sense the amount of movement of a moving object; and a control device connected to the sensing device. The control device is configured to control, according to the amount of movement, the walk-behind power tool to steer.

The present application further provides a technical solution.

A walk-behind power tool includes: a body supported by a traveling assembly; and a handle device connected to the body. The handle device includes: connecting rods connected to the body; a gripping handle including a first grip and a second grip; and a rotary portion rotatably connecting the gripping handle to the connecting rods, where when the rotary portion rotates, the whole constituted by the first grip and the second grip rotates with the rotary portion. The traveling assembly is configured to cause, in response to rotation of the gripping handle, the walk-behind power tool to steer.

In some examples, the rotary portion is configured to rotate about a rotation axis, the connecting rods extend substantially along a first straight line, and the rotation axis is parallel to the first straight line.

In some examples, the rotary portion is configured to rotate about a rotation axis, the connecting rods extend substantially along a first straight line, and the included angle between the rotation axis and the first straight line is greater than or equal to 0 degrees and less than or equal to 30 degrees.

In some examples, the rotary portion is disposed in the region formed by the two connecting rods.

The present application has the following benefits: the walk-behind power tool provided in the present application can be freely controlled to turn, which is flexible to operate and is safe, convenient, and comfortable to use.

### BRIEF DESCRIPTION OF DRAWINGS

FIG. 1 is a perspective view of a walk-behind power tool in an example of the present application.
FIG. 2 is a schematic view of a handle device of the walk-behind power tool in FIG. 1.
FIG. 3 is a control principle diagram of the system of the walk-behind power tool in FIG. 1.
FIG. 4 is a schematic view showing a gripping handle in FIG. 1 at an initial position.
FIG. 5 is a schematic view showing the gripping handle in FIG. 4 after rotation.
FIG. 6 is a schematic view showing the structure of a rotary assembly in FIG. 4.
FIG. 7 is a schematic view showing the structure of a rotary assembly in FIG. 4 from another viewing angle.
FIG. 8 is a partial schematic view of A in FIG. 7.
FIG. 9 is a schematic view of a handle device in another example.
FIG. 10 is a schematic view showing the structure of a gripping handle in FIG. 9.
FIG. 11 is a perspective view of a walk-behind power tool in another example.
FIG. 12 is a schematic view of a handle device of the walk-behind power tool in FIG. 11.
FIG. 13 is a schematic view showing a gripping handle in FIG. 12 after rotation.
FIG. 14 is a schematic view showing a rotary portion and a locking device in FIG. 13.
FIG. 15 is a partial schematic view of B in FIG. 14.
FIG. 16 is a schematic view of a walk-behind power tool in another example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

A walk-behind power tool is a tool that outputs power, such as a hand-push electric mower, a hand-push snow thrower, or a hand-push road sweeper. In some examples, the walk-behind power tool is a hand-push mower for performing specific cutting work.

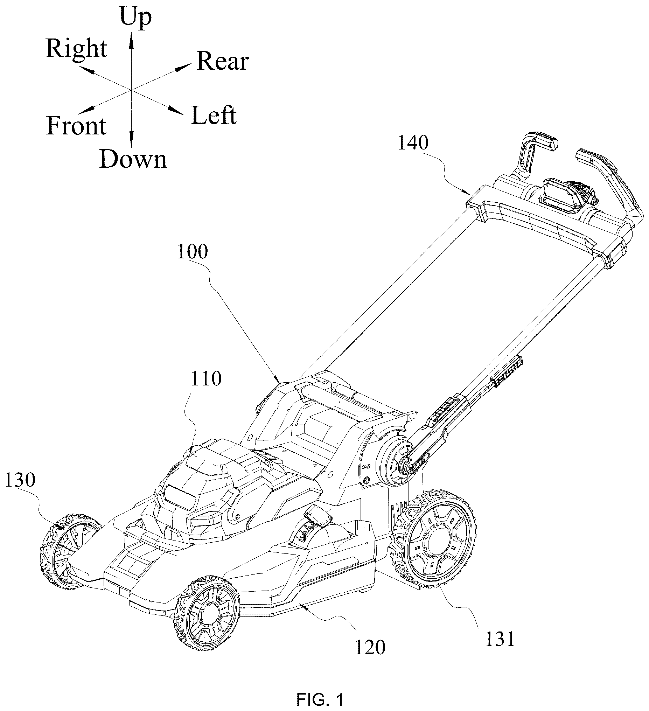

As shown in FIGS. 1 to 3, in some examples, a walk-behind power tool 100 mainly includes a body 110, a working assembly 120, a traveling assembly 130, a control device 160, and a handle device 140. To clearly illustrate the technical solutions of the present application, the directions such as front, rear, left, right, up, and down as shown in FIG. 1 are defined. The body 110 is supported on the traveling assembly 130, and the traveling assembly 130 is used for enabling the walk-behind power tool 100 to walk on lawns. The walk-behind power tool 100 uses the working assembly 120 as a working accessory to implement a mowing function. The walk-behind power tool 100 can implement different working functions by using different working accessories. The working assembly 120 includes a working member 121 and a third motor 122 for driving the working member 121 to work. In this example, the working member 121 is a blade for mowing grass. When the walk-behind power tool is a snow thrower, the working member is a snow removal shovel for removing snow. The handle device 140 is connected to the body 110 and includes gripping handles 141 for a user to hold. In the process of using the walk-behind power tool 100 to work, an operator holds the gripping handles 141 of the handle device 140, switches the working assembly 120 from a static first state to a working second state through the control device 160, and then pushes the handle device 140 to work.

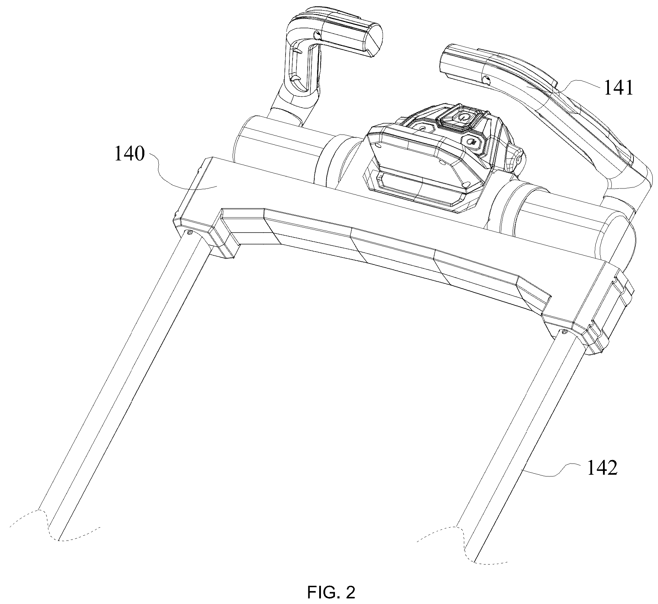

As shown in FIGS. 2 to 8, the present application provides the walk-behind power tool 100, and at least part of the gripping handles 141 are configured to be movable relative to the body 110. During use of the walk-behind power tool 100, the user holds and rotates the at least part of the gripping handles 141 such that the at least part of the gripping handles 141 move relative to the body 110. The walk-behind power tool 100 also includes a sensing device 150. The sensing device 150 is configured to sense the amount of movement of the at least part of the gripping handles 141. The control device 160 is connected to the sensing device 150. The control device 160 receives a signal of the amount of movement of a gripping handle 141 from the sensing device 150, and may then control, according to the amount of movement of the gripping handle 141, the walk-behind power tool 100 to steer (turn left or turn right or make a U-turn). The angle by which the walk-behind power tool 100 steers is adjusted based on the amount of movement.

When pushing the walk-behind power tool 100 to work on the ground, the user can adjust the gripping handle 141 relative to the body 110 to perform steering as needed. The user rotates the gripping handle 141 and then controls the walk-behind power tool 100 to steer. That is to say, the rotation is inputted, and the steering movement is outputted, which are both rotations. Therefore, there is no sense of jerking for the user, operation is more convenient, and forward experience is better. The amount of movement of the gripping handle 141 is detected through the sensing device 150, and the walk-behind power tool 100 is controlled through the control device 160 to steer. Thus, the detection precision is higher, a faster response is made to the control of the steering movement, the whole steering process is relatively smooth, and the walk-behind power tool turns and/or makes a U-turn freely.

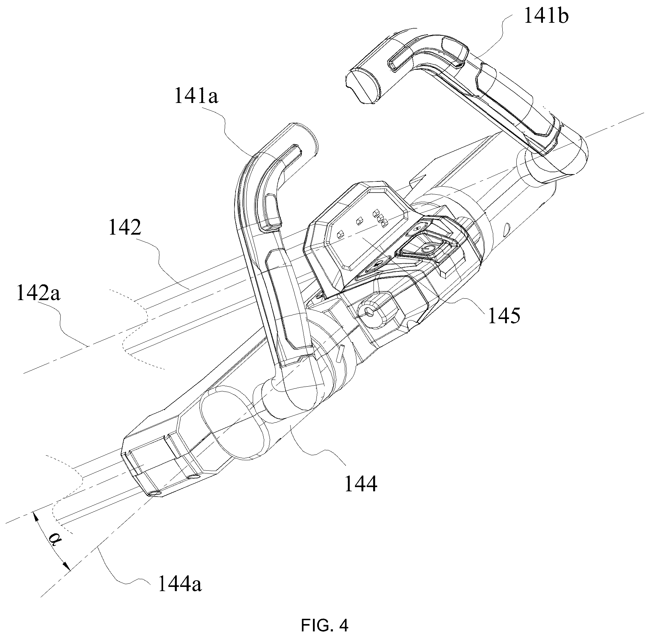

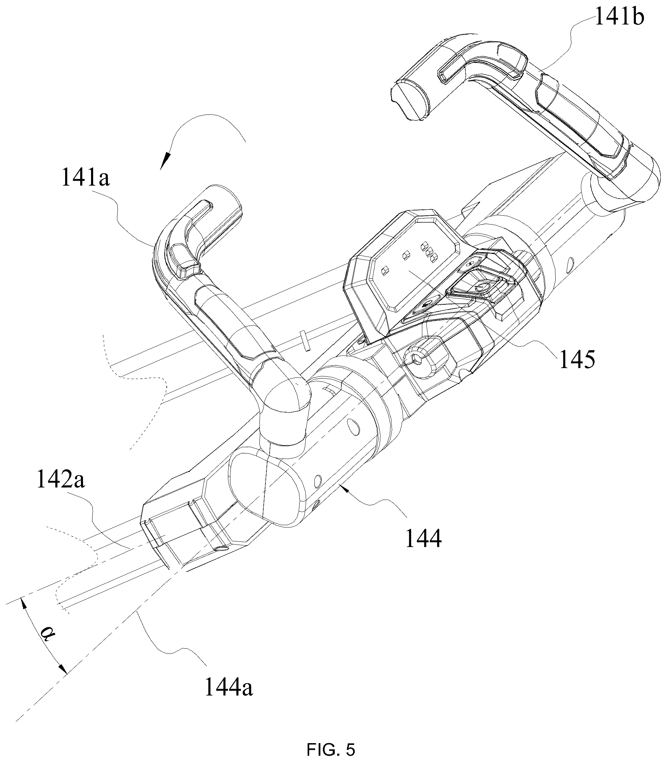

As shown in FIGS. 4 and 5, in some examples, the handle device 140 includes a connecting rod 142. One end of the connecting rod 142 is connected to the body 110, and the other end of the connecting rod 142 is connected to the gripping handle 141. The gripping handle 141 is configured to be movable relative to the body 110. The connecting rod 142 extends substantially along a first straight line 142a. The at least part of the gripping handles 141 are configured to rotate about a rotation axis 144a. The rotation axis 144a is perpendicular to the first straight line 142a, that is, the included angle α between the rotation axis 144a and the first straight line 142a is equal to 90 degrees. In this example, the handle device 140 includes two connecting rods 142. The whole constituted by the two connecting rods 142 extends in a first plane. The two connecting rods 142 are parallel to each other and extend along the direction of the first straight line 142a. The first straight line 142a is disposed within the first plane. The rotation axis 144a may or may not be disposed within the first plane. In this example, the user operates the gripping handle 141 to rotate forward or backward. The sensing device 150 senses the amount of movement of the gripping handle 141 rotating forward or backward about the rotation axis 144a. A signal of the amount of movement may indicate a rotation direction of the gripping handle 141 and a rotation angle of the gripping handle 141. The control device 160 converts the signal of the amount of movement into an angle control signal for controlling the traveling assembly 130 to steer such that the walk-behind power tool is steered to a corresponding direction and angle. In this example, the rotation direction in which the user operates the gripping handle 141 is in line with user habits, and the operation is flexible and convenient.

It is to be understood that the amount of movement may be understood as the amount of rotation or a rotation angle of the gripping handle relative to the body. The amount of movement is a vector signal with a direction.

In some examples, the included angle α between the rotation axis 144a and the first straight line 142a is greater than or equal to 60 degrees and less than or equal to 90 degrees. In some examples, the included angle α between the rotation axis 144a and the first straight line 142a is greater than or equal to 70 degrees and less than or equal to 90 degrees. In some examples, the included angle α between the rotation axis 144a and the first straight line 142a is greater than or equal to 80 degrees and less than or equal to 90 degrees. In some examples, the included angle α between the rotation axis 144a and the first straight line 142a is greater than or equal to 45 degrees and less than or equal to 60 degrees. In some examples, the included angle α between the rotation axis 144a and the first straight line 142a is greater than or equal to 45 degrees and less than or equal to 90 degrees. In some examples, the angle between the rotation axis 144a and the first straight line 142a is determined according to actual working requirements of the walk-behind power tool, which is not limited in the present application.

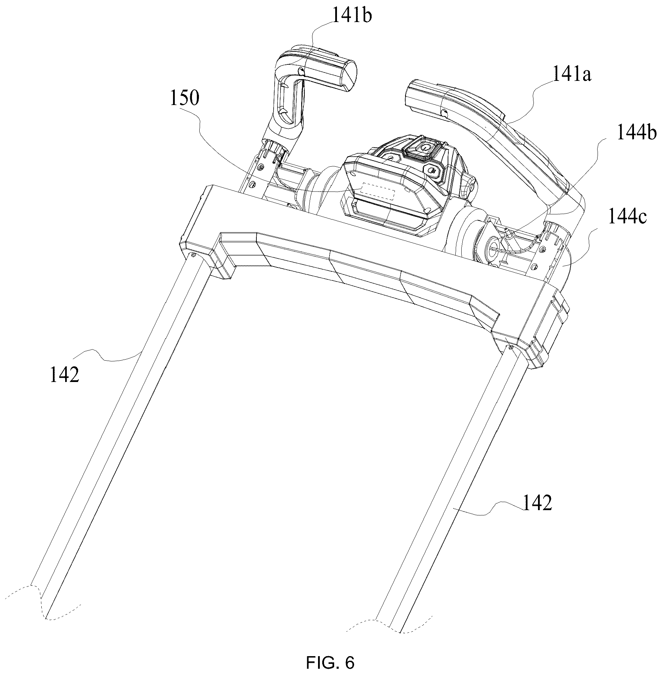

As shown in FIGS. 4 to 7, in some examples, the handle device 140 further includes a rotary assembly 144, a fixed end of the gripping handle 141 is connected to one end of the rotary assembly 144, and another end of the rotary assembly 144 is movably connected to the connecting rod 142 and is rotatable about the rotation axis 144a relative to the connecting rod 142. In this example, the gripping handle 141 is rotatable forward or backward about the rotation axis 144a relative to the connecting rod 142 through the rotary assembly 144, which is consistent with the action direction in which the user pushes the walk-behind power tool 100 to work. This configuration is in line with the user habits and makes the operation convenient. As shown in FIGS. 6 to 8, in some examples, the rotary assembly 144 includes a mounting housing 144c and a rotary shaft 144b. The fixed end of the gripping handle 141 extends into the mounting housing 144c and is fixedly connected to the mounting housing 144c. One end of the rotary shaft 144b extends into the mounting housing 144c and is fixedly connected to the mounting housing 144c, and the other end of the rotary shaft 144b extends into the housing of a control panel fixed to an end portion of the connecting rod 142. The rotary shaft 144b is rotatable relative to the connecting rod 142 about a first axis in the radial direction of the rotary shaft 144b. The first axis is perpendicular to the first straight line 142a, that is, the included angle between the first axis and the first straight line 142a is equal to 90 degrees. The first axis of the rotary shaft 144b is the rotation axis 144a of the gripping handle 141. When the user holds the gripping handle 141 to rotate the gripping handle 141 forward or backward, the gripping handle 141, the mounting housing 144c, and the rotary shaft 144b rotate as a whole about the rotation axis 144a.

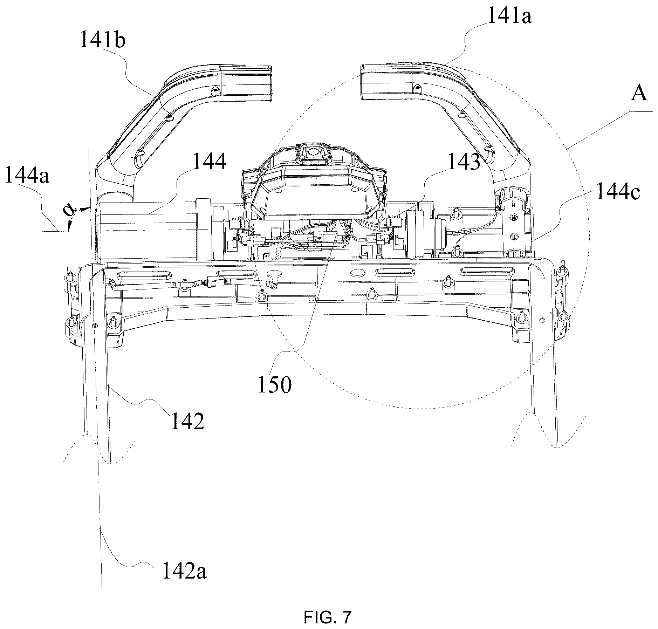

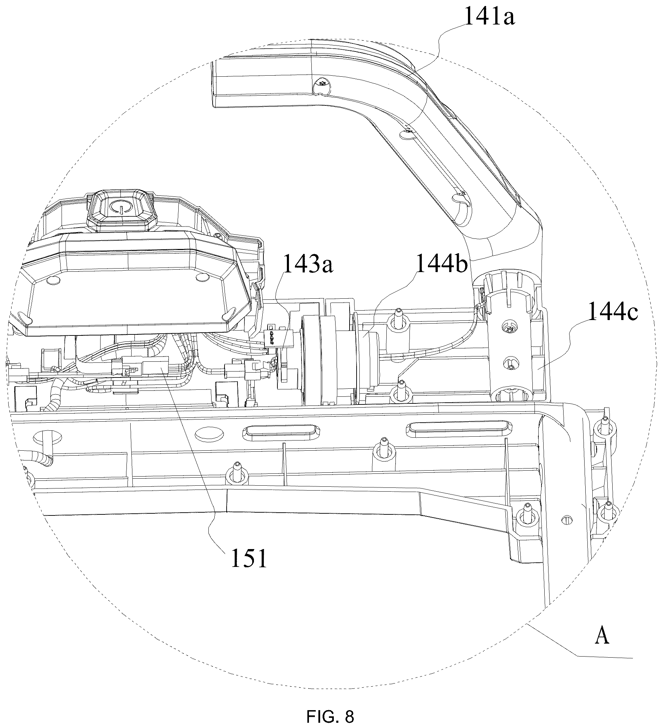

As shown in FIGS. 7 and 8, in some examples, the gripping handle 141 includes a trigger portion 143, the trigger portion 143 includes a trigger member 143a, and the sensing device 150 is movable relative to the gripping handle 141 and senses the amount of movement of the gripping handle 141 by sensing the amount of movement of the trigger member 143a. In some examples, the sensing device 150 may be a sensor 151, and the sensor 151 implements position change detection of the gripping handle 141 by cooperating with the trigger member 143a. In some examples, the sensor 151 is mounted in the housing of the control panel, and the position of the sensor 151 is unchanged. The trigger portion 143 is located at the other end of the rotary shaft 144b, and the trigger member 143a is mounted on the surface of the other end of the rotary shaft 144b. The trigger member 143a can generate, with the rotation of the rotary shaft 144b, a rotational movement relative to the sensor 151 fixed in the housing. The sensor 151 detects the amount of rotational displacement of the gripping handle 141 and transmits the amount of rotational displacement to the control device 160 after signal processing, and thus, the walk-behind power tool is separately controlled to turn left or right. The sensing device 150 cooperates with the trigger member 143a to detect the amount of movement of the gripping handle 141 so that the detection precision is higher, the faster response is made to the control of the steering movement, and the whole steering process is relatively smooth. In some examples, the position of the trigger member 143a and the position of the sensing device 150 may be exchanged, where the trigger member 143a is disposed in the housing, and the sensing device 150 is fixedly disposed on the rotary shaft 144b. In the steering process, the position of the trigger member 143a is unchanged, and the sensing device 150 rotates with the rotation of the gripping handle 141, thereby detecting the amount of rotational movement of the gripping handle 141.

As shown in FIGS. 4 to 6, in some examples, the handle device 140 includes a first gripping handle 141a and a second gripping handle 141b. Correspondingly, two sensing devices 150 may be provided, that is, the two sensing devices 150 include a first sensing device and a second sensing device. The first sensing device and the second sensing device sense the amount of movement of the first gripping handle 141a and the amount of movement of the second gripping handle 141b, respectively. In some other examples, one sensing device 150 may be provided to sense the amount of movement of the first gripping handle 141a and the amount of movement of the second gripping handle 141b separately. The number of sensing devices 150 is determined according to actual requirements and is not specifically limited.

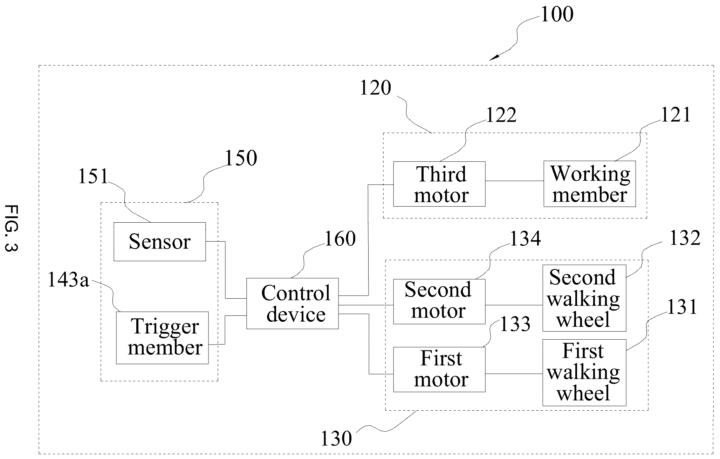

As shown in FIGS. 1 and 3, in some examples, the traveling assembly 130 includes a first traveling wheel 131 and a second traveling wheel 132. Along a front and rear direction, the first traveling wheel 131 and the second traveling wheel 132 are mounted at the rear end of the bottom of the body 110, which are rear wheels of the walk-behind power tool. Along a left and right direction, the first traveling wheel 131 is disposed on the left side of the second traveling wheel 132. In some examples, as shown in FIG. 3, the traveling assembly 130 further includes a first motor 133 and a second motor 134. The first motor 133 is connected to the first traveling wheel 131, and the second motor 134 is connected to the second traveling wheel 132. The control device 160 is connected to the first motor 133 and the second motor 134 separately, and the control device 160 controls the first motor 133 and the second motor 134 to drive the first traveling wheel 131 and the second traveling wheel 132, respectively. The first traveling wheel 131 and the second traveling wheel 132 are separately driven by the independent motors, which means that each of the speeds of the first traveling wheel 131 and the second traveling wheel 132 may be independently controlled. The control device 160 converts the received signal of the amount of movement of the gripping handle 141 into a steering direction signal and a steering angle signal for the traveling assembly 130, decouples the direction signal and the angle signal into different speed adjustment signals for the first motor 133 and the second motor 134, and adjusts the speed of the first traveling wheel 131 and the speed of the second traveling wheel 132 separately so that the first traveling wheel 131 and the second traveling wheel 132 have a speed difference, and the walk-behind power tool 100 is steered (such as turning left or turning right or making a U-turn) through the difference between the speed of the first traveling wheel 131 and the speed of the second traveling wheel 132. In the walk-behind power tool 100 of this example, the speeds of the two traveling wheels are adjusted through the two independent motors, and efficient and precise turning is implemented by adjusting the speed difference between the traveling wheels on the two sides, thereby providing better maneuverability and operation efficiency. In some other examples, the traveling assembly 130 may include one motor and a differential. The motor and the differential drive the first traveling wheel 131 and the second traveling wheel 132 separately to adjust the speeds of the two traveling wheels, thereby steering the walk-behind power tool 100. In some examples, the first motor 133, the second motor 134, and the third motor 122 may be electric motors. In some other examples, the motor may be an internal combustion engine powered through fuel combustion.

As shown in FIGS. 6 to 8, in some examples, a free end of the first gripping handle 141a is held by the user, a fixed end of the first gripping handle 141a extends into the mounting housing 144c and is fixedly connected to the mounting housing 144c, one end of the rotary shaft 144b extends into the mounting housing 144c and is fixedly connected to the mounting housing 144c, the rotary shaft 144b is rotatable about the rotation axis 144a relative to the connecting rod 142, and the rotation axis 144a is perpendicular to the first straight line 142a, that is, the included angle between the rotation axis 144a and the first straight line 142a is equal to 90 degrees. The trigger member 143a is mounted on the surface of the other end of the rotary shaft 144b, and the sensor 151 is mounted in the housing of the control panel and opposite to the position of the trigger member 143a. Correspondingly, the connecting structure between the second gripping handle 141b and the connecting rod 142 is the same as the connecting structure between the first gripping handle 141a and the connecting rod 141, and the details are not repeated here.

As shown in FIG. 4, when the user pushes the walk-behind power tool 100 to work along a straight line on the ground, it is to be understood that the walk-behind power tool 100 is in a self-traveling straight-line working mode, and the gripping handle 141 is located at an initial position. This state may be referred to as an initial state of the gripping handle 141. The amount of movement (or the amount of rotational displacement) of the first gripping handle 141a and the amount of movement (or the amount of rotational displacement) of the second gripping handle 141b may be defined as 0 in this case. When the walk-behind power tool 100 needs to steer left (or make a U-turn to the left), the first gripping handle 141a is rotated forward about the rotation axis 144a, and the state of the first gripping handle 141a after the rotation is shown in FIG. 5. The sensor 151 detects a signal of the amount of movement of the first gripping handle 141a, and the signal of the amount of movement indicates a rotation direction of the first gripping handle 141a and a rotation angle of the first gripping handle 141a. The control device 160 converts the signal of the amount of movement into an angle control signal for controlling the traveling assembly 130 to steer left, decouples the angle control signal into different speed control signals for the first motor 133 and the second motor 134, and adjusts the speed of the first traveling wheel 131 and the speed of the second traveling wheel 132 separately so that the first traveling wheel 131 and the second traveling wheel 132 have a speed difference, and thus, the walk-behind power tool 100 turns left by a corresponding angle through the difference between the speed of the first traveling wheel 131 and the speed of the second traveling wheel 132. With a continued increase in the rotation angle of the first gripping handle 141a, the angle by which the walk-behind power tool turns left also increases correspondingly. If the first gripping handle 141a is rotated to be gradually reset (or the rotation angle decreases), the angle by which the walk-behind power tool turns left also decreases correspondingly. When the angle by which the walk-behind power tool turns left meets the requirement of a working condition, the rotation may be stopped, and the first gripping handle 141a may be reset, that is, the first gripping handle 141a may return to the initial state. When the walk-behind power tool 100 needs to steer right (or make a U-turn to the right), the second gripping handle 141b is rotated forward about the rotation axis 144a. The sensor 151 detects a signal of the amount of movement of the second gripping handle 141b, and the signal of the amount of movement indicates a rotation direction of the second gripping handle 141b and a rotation angle of the second gripping handle 141b. The control device 160 converts the signal of the amount of movement into an angle control signal for controlling the traveling assembly 130 to steer right, decouples the angle control signal into different speed signals for the first motor 133 and the second motor 134, and adjusts the speed of the first traveling wheel 131 and the speed of the second traveling wheel 132 separately so that the first traveling wheel 131 and the second traveling wheel 132 have a speed difference, and thus, the walk-behind power tool turns right by a corresponding angle through the difference between the speed of the first traveling wheel 131 and the speed of the second traveling wheel 132. With an increase in the rotation angle of the second gripping handle 141b, the angle by which the power tool turns right also increases correspondingly. If the second gripping handle 141b is rotated to be reset (or the rotation angle decreases), the angle by which the walk-behind power tool turns right also decreases correspondingly. When the angle by which the walk-behind power tool turns right meets the requirement of a working condition, the rotation may be stopped, and the second gripping handle 141b may be reset, that is, the second gripping handle 141b may return to the initial state. In this example, the user operates the first gripping handle 141a on the left side to control the walk-behind power tool 100 to turn left and operates the second gripping handle 141b on the right side to control the walk-behind power tool 100 to turn right, which is in line with the user habits and is not easy to cause incorrect operation. In addition, there is no sense of jerking in the turning processes, and the operation is flexible and convenient.

In some other examples, only the first gripping handle 141a or the second gripping handle 141b may be configured to be movable relative to the connecting rod 142. Correspondingly, only one sensing device 150 is provided for sensing the amount of movement of the first gripping handle 141a or the amount of movement of the second gripping handle 141b. The forward rotation and the backward rotation of the first gripping handle 141a or the second gripping handle 141b represent different turning directions. The control device 160 controls, according to the sensed rotation direction and amount of movement of the first gripping handle 141a or the second gripping handle 141b, the walk-behind power tool 100 to steer. In some examples, the first gripping handle 141a is configured to be movable relative to the connecting rod 142. When it is detected that the first gripping handle 141a has the movement amount of forward rotation relative to the connecting rod 142 from an initial position, the walk-behind power tool 100 is correspondingly controlled to steer left. When it is detected that the first gripping handle 141a has the movement amount of backward rotation relative to the connecting rod 142 from the initial position, the walk-behind power tool 100 is correspondingly controlled to steer right.

In some examples, a locking device is further disposed on the handle device 140. The gripping handle has an unlocked state in which the gripping handle is movable relative to the body 110 and a locked state in which the gripping handle is fixed relative to the body 110, and the locking device may switch the gripping handle between the unlocked state and the locked state. In some examples, when the locking device causes the gripping handle to be in the locked state, the gripping handle 141 is fixed relative to the body 110, which may be understood as follows: the walk-behind power tool 100 is in the self-traveling straight-line working mode, and in this case, the user cannot turn the walk-behind power tool 100 by rotating the gripping handle 141. When the user operates the locking device to switch the gripping handle 141 to the unlocked state, the gripping handle 141 is movable and rotatable relative to the body 110, which may be understood as follows: the walk-behind power tool is in a turning working mode, and in this case, the user may rotate the gripping handle 141 to freely turn the walk-behind power tool 100. In some examples, the locking device includes a sliding structure and a locking structure. The locking device includes a sliding plate and a locking member. One end of the locking member is fixedly connected to the connecting rod 142. The sliding plate is movably connected to the rotary assembly 144. The sliding plate has a first position and a second position to which the sliding plate moves relative to the locking member. When the sliding plate is at the first position, the sliding plate is engaged with and fixed to the locking member, and then the rotary assembly 144 is fixed to the connecting rod 142 so that the gripping handle 141 is in the locked state, that is, the walk-behind power tool 100 works in the self-traveling straight-line mode. When the sliding plate is at the second position, the sliding plate is disengaged from the locking member, the rotary assembly 144 can freely rotate, and the gripping handle 141 is in the unlocked state, that is, the walk-behind power tool 100 works in the turning mode, and the walk-behind power tool is controlled to steer by rotating the gripping handle 141. In this example, the locking device can limit the rotational movement of the gripping handle 141 and implement the switchover between the self-traveling straight-line mode and the turning mode, thereby facilitating flexible operation of the user.

As shown in FIGS. 4 and 5, in some examples, the walk-behind power tool 100 further includes a display screen 145 disposed on the handle device 140. The display screen 145 may be a display on the control panel, where the display performs a display for the user. In some examples, the display screen 145 can visually display a steering direction and/or a steering angle. In some examples, when the display screen 145 is a light-emitting diode (LED) screen, the left turn and the right turn may be displayed differently through different LED lights in the forms of left and right arrows, and when the display screen 145 is a liquid-crystal display (LCD) screen, the left turn, the right turn, and the corresponding turning angles may be displayed differently through different icons, different colors, different texts, different graphics and texts, different flickering frequencies, or the like. A specific display form is not limited in the present application as long as the visualization requirement is met. In some examples, a working mode (such as the self-traveling straight-line mode and the turning mode) can be visually displayed on the display screen 145. In some examples, the straight-line mode and the turning mode may be displayed differently through LED lights, the straight-line mode and the turning mode may be displayed differently through different icons, the straight-line mode and the turning mode may be displayed differently through different colors of an icon, or different modes may be displayed differently through texts. A specific display form is not limited in the present application as long as the visualization requirement is met. In this example, the user can directly view steering information and state information about the working mode through a visual display of the display screen 145.

In some examples, the sensor 151 includes a Hall sensor, and the trigger member 143a includes a magnet. In the turning working mode, the amount of movement of the gripping handle 141 is measured through a change of the magnetic field between the Hall sensor and the magnet. The Hall switch has the characteristics of no contact, low power consumption, a long service life, high response frequency, and the like. The Hall switch is internally packaged into an integrated structure through epoxy resin, can reliably work in various severe environments, and effectively meets the requirements of lawn trimming. In some other examples, a magnetic encoding angle sensor may be used as the sensing device 150. The magnetic encoding angle sensor has the characteristics of high precision, a high resolution, high reliability, a long service life, a strong anti-interference capability, suitability for severe environments, and the like. The magnetic encoding angle sensor can also meet the use requirements of the power tool.

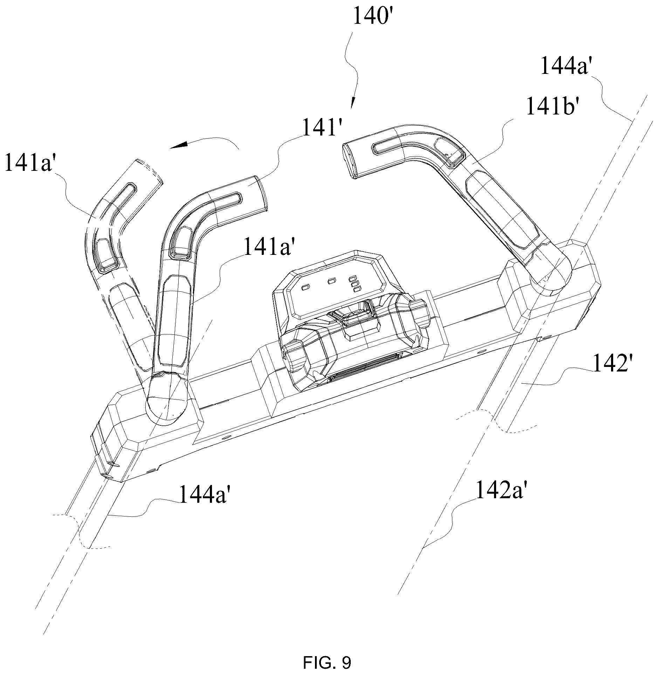

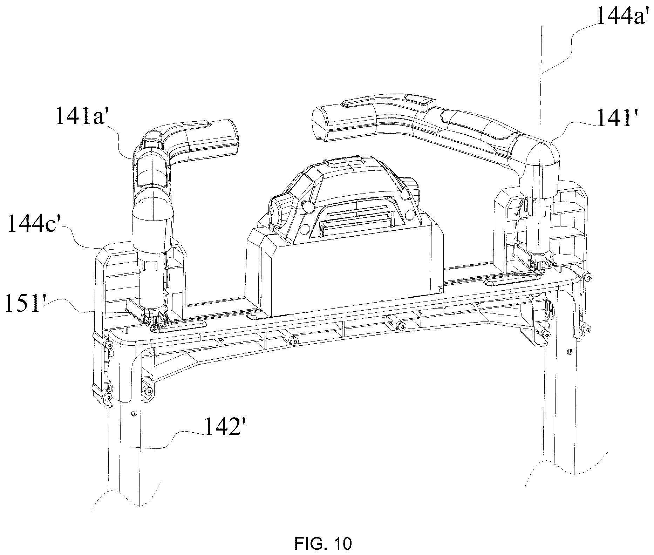

FIGS. 9 and 10 show a handle device 140' in another example. The portions of the walk-behind power tool in the example shown in FIGS. 1 to 8 that are compatible with this example may be applied to this example, and only the differences between this example and the examples shown in FIGS. 1 to 8 are described below.

In this example, the direction of movement of a gripping handle 141' relative to the body is different from that in the examples shown in FIGS. 1 to 8. As shown in FIGS. 9 and 10, in some examples, at least part of gripping handles 141' are configured to rotate about a rotation axis 144a' relative to a connecting rod 142'. The rotation axis 144a' is parallel to a first straight line 142a' along which the connecting rod 142' extends, that is, the included angle between the rotation axis 144a' and the first straight line 142a' is equal to 0 degrees. In this example, the user operates the gripping handle 141' to rotate along the left and right direction (or inward or outward). The sensing device 150 senses the amount of movement of the gripping handle 141' rotating leftward or rightward about the rotation axis 144a. A signal of the amount of movement may indicate a rotation direction of the gripping handle 141' and a rotation angle of the gripping handle 141'. The control device converts the signal of the amount of movement into an angle control signal for controlling the traveling assembly to steer such that the walk-behind power tool is steered to a corresponding direction and angle. In this example, the rotation direction in which the user operates the gripping handle 141' is in line with the user habits, and the operation is flexible and convenient.

In some examples, the included angle between the first straight line 142a' and the rotation axis 144a' about which the gripping handle 141' rotates relative to the body is greater than or equal to 0 degrees and less than or equal to 30 degrees. In some examples, the included angle between the rotation axis 144a' and the first straight line 142a' is greater than or equal to 10 degrees and less than or equal to 30 degrees. In some examples, the included angle between the rotation axis 144a' and the first straight line 142a' is greater than or equal to 0 degrees and less than or equal to 20 degrees. In some examples, the included angle between the rotation axis 144a' and the first straight line 142a' is greater than or equal to 0 degrees and less than or equal to 10 degrees. In some examples, the included angle between the rotation axis 144a' and the first straight line 142a' is greater than or equal to 0 degrees and less than or equal to 45 degrees.

As shown in FIG. 10, in some examples, the handle device 140' further includes a mounting housing 144c'. The mounting housing 144c' is fixedly connected to the connecting rod 142'. One end of the gripping handle 141' extends into the mounting housing 144c' and is rotatable relative to the mounting housing 144c' about a second axis in the radial direction of this end portion. The second axis of the gripping handle 141' is the rotation axis 144a' of the gripping handle 141'. When the user holds the gripping handle 141' to rotate the gripping handle 141' in the left and right direction, the gripping handle 141' rotates about the rotation axis 144a'. As shown in FIG. 10, in some examples, the sensing device includes a sensor 151'. A potentiometer may be used as the sensor 151'. The sensor 151' is disposed in the mounting housing 144c' and located near the end portion of the gripping handle 141'. A sliding contact (used as a trigger member) of the sensor 151' is mounted at the end portion of the gripping handle 141'. When rotating, the gripping handle 141' drives the sliding contact to move, thereby changing a resistance value of the sensor 151'. The rotation angle of the gripping handle 141' is determined based on the change in the resistance value of the sensor 151'. In this example, the change in the resistance value of the sensor 151' is adjusted through the trigger member such that the rotation direction of the gripping handle 141' and the rotation angle of the gripping handle 141' are detected, and the structure is simple and easy to implement.

As shown in FIG. 9, when the user pushes the walk-behind power tool to work along a straight line on the ground, the gripping handle 141' is located at an initial position. This state may be referred to as an initial state of the gripping handle 141'. The amount of movement of a first gripping handle 141a' and the amount of movement of a second gripping handle 141b' may be defined as 0 in this case. When the walk-behind power tool needs to steer left, the first gripping handle 141a' is rotated left, and the state of the gripping handle 141a' after the rotation is shown by the dashed lines in FIG. 9. The sensing device detects a signal of the amount of movement of the first gripping handle 141a', and the signal of the amount of movement indicates a rotation direction of the first gripping handle 141a' and a rotation angle of the first gripping handle 141a'. The control device converts the signal of the amount of movement into an angle control signal for controlling the traveling assembly to steer left, further decouples the angle control signal into different speed signals for the first motor and the second motor, and adjusts the speed of the first traveling wheel and the speed of the second traveling wheel separately so that the first traveling wheel and the second traveling wheel have a speed difference, and thus, the walk-behind power tool turns left by a corresponding angle. With an increase in the rotation angle of the gripping handle 141', the angle by which the power tool turns left also increases correspondingly. If the first gripping handle 141a' is rotated to be reset (or the rotation angle decreases), the angle by which the walk-behind power tool turns left also decreases correspondingly. When the angle by which the walk-behind power tool turns left meets the requirement of the working condition, the rotation may be stopped, and the first gripping handle 141a' may be reset to return to the initial state. Correspondingly, when the walk-behind power tool needs to steer right, the second gripping handle 141b' is rotated right. The sensing device detects a signal of the amount of movement of the second gripping handle 141b', and the signal of the amount of movement indicates a rotation direction of the second gripping handle 141b' and a rotation angle of the second gripping handle 141b'. The control device converts the signal of the amount of movement into an angle control signal for controlling the traveling assembly to steer right, and thus, the walk-behind power tool turns right by a corresponding angle. With an increase in the rotation angle of the gripping handle, the angle by which the power tool turns also increases correspondingly. If the second gripping handle 141b' is rotated to be reset (or the rotation angle decreases), the angle by which the walk-behind power tool turns right also decreases correspondingly. When the angle by which the walk-behind power tool turns right meets the requirement of the working condition, the rotation may be stopped, and the second gripping handle 141b' may be reset to return to the initial state. In this example, the first gripping handle 141a' and the second gripping handle 141b' are rotated independently and freely controlled to turn so that the operation is flexible and convenient.

In some other examples, only the first gripping handle 141a' or the second gripping handle 141b' may be configured to be movable relative to the body. Correspondingly, only one sensing device is provided for sensing the amount of movement of the first gripping handle 141a' or the amount of movement of the second gripping handle 141b'. The leftward rotation and the rightward rotation of the first gripping handle 141a' or the second gripping handle 141b' represent different turning directions. The control device controls, according to the sensed rotation direction and amount of movement of the first gripping handle 141a' or the second gripping handle 141b', the walk-behind power tool to steer. In an example, the first gripping handle 141a' is configured to be movable relative to the body. When it is detected that the first gripping handle 141a' has the amount of leftward movement (that is, outward movement) from the initial position, the walk-behind power tool is correspondingly controlled to steer left. When it is detected that the first gripping handle 141a' has the amount of rightward movement (that is, inward movement) from the initial position, the walk-behind power tool is correspondingly controlled to steer right.

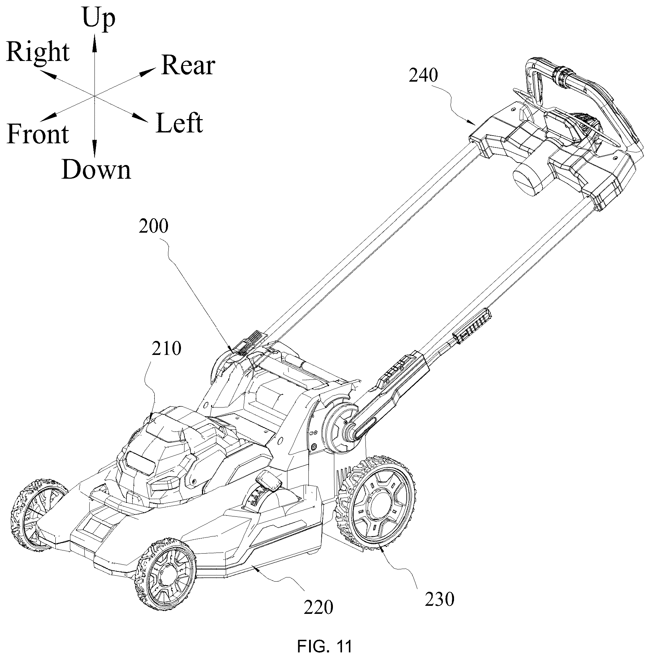

FIGS. 11 to 15 show a walk-behind power tool 200 in another example. The portions of the walk-behind power tools 100 in the example shown in FIGS. 1 to 8 and the example shown in FIGS. 9 and 10 that are compatible with this example may be applied to this example, and only the differences in this example are described below.

As shown in FIG. 11, in this example, the walk-behind power tool 200 mainly includes a body 210, a working assembly 220, a traveling assembly 230, and a handle device 240. To clearly illustrate the technical solutions of the present application, the directions such as front, rear, left, right, up, and down as shown in FIG. 11 are defined. The body 210 is supported on the traveling assembly 230, and the traveling assembly 230 is used for enabling the walk-behind power tool 200 to walk on lawns. The walk-behind power tool 200 uses the working assembly 220 as a working accessory to implement a mowing function. The walk-behind power tool 200 can implement different functions by using different working accessories. The working assembly 220 includes a working member and a third motor for driving the working member to work. The handle device 240 is connected to the body 210 and includes a gripping handle 241 for the user to hold.

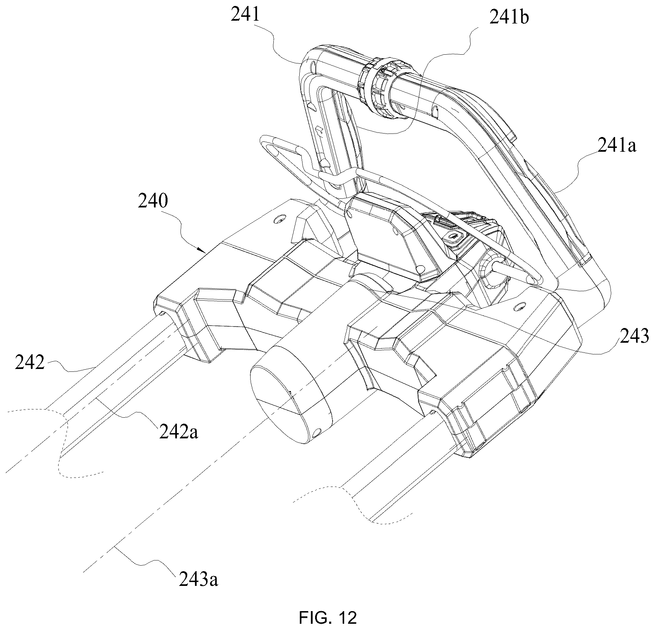

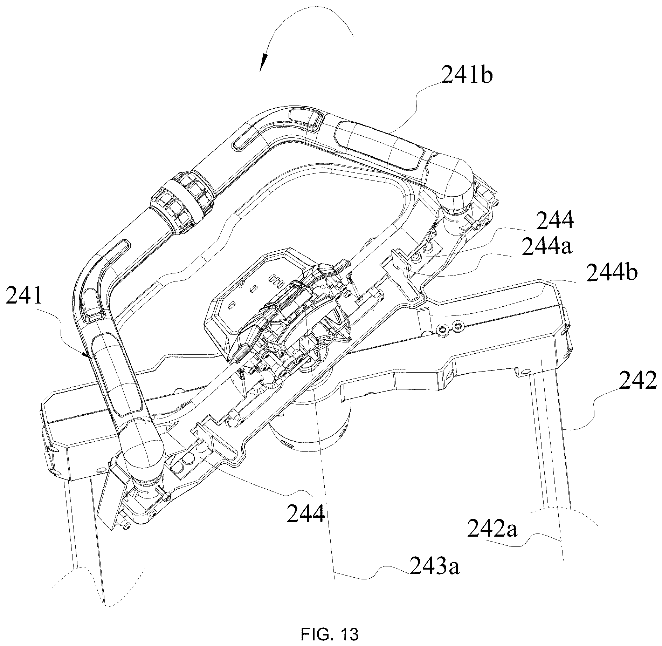

As shown in FIGS. 12 and 13, in some examples, the walk-behind power tool 200 provided in the present application includes the gripping handle 241, the gripping handle 241 includes a first grip 241a and a second grip 241b, and the walk-behind power tool 200 further includes a rotary portion 243. The rotary portion 243 rotatably connects the gripping handle 241 to connecting rods 242, where when the rotary portion 243 rotates, the whole constituted by the first grip 241a and the second grip 241b rotates with the rotary portion 243. After the rotation of the gripping handle 241 is detected, the traveling assembly 230 is controlled so that the walk-behind power tool 200 is steered.

When pushing the walk-behind power tool to work, the user can hold and rotate the first grip 241a and/or the second grip 241b so that the whole constituted by the first grip 241a and the second grip 241b of the gripping handle 241 rotates with the rotary portion 243, and the user can adjust the gripping handle 241 relative to the body 210 to perform steering (turning or a U-turn) as needed, so as to steer the walk-behind power tool 200. The operation is more convenient, there is no sense of jerking, and the forward experience is better.

As shown in FIGS. 12 and 13, in some examples, the rotary portion 243 is configured to rotate about a rotation axis 243a relative to a connecting rod 242. The connecting rod 242 extends substantially along a first straight line 242a, and the rotation axis 243a is substantially parallel to the first straight line 242a, that is, the included angle between the rotation axis 243a and the first straight line 242a is 0 degrees. The handle device 240 includes the two connecting rods 242. The whole constituted by the two connecting rods 242 extends in the first plane. The two connecting rods 242 are parallel to each other and extend along the direction of the first straight line 242a. The first straight line 242a is disposed within the first plane. The rotation axis 243a may or may not be disposed within the first plane. In this example, the rotation direction in which the user operates the gripping handle 241 is in line with the user habits, and the operation is flexible and convenient.

In some examples, the included angle between the rotation axis 243a and the first straight line 242a is greater than or equal to 0 degrees and less than or equal to 30 degrees. In some examples, the included angle between the rotation axis 243a and the first straight line 242a is greater than or equal to 0 degrees and less than or equal to 20 degrees. In some examples, the included angle between the rotation axis 243a and the first straight line 242a is greater than or equal to 10 degrees and less than or equal to 30 degrees. In some examples, the included angle between the rotation axis 243a and the first straight line 242a is greater than or equal to 20 degrees and less than or equal to 30 degrees. In some examples, the included angle between the rotation axis 243a and the first straight line 242a is greater than or equal to 15 degrees and less than or equal to 45 degrees. In some examples, the angle between the rotation axis 243a and the first straight line 242a is determined according to the actual working requirements of the walk-behind power tool, which is not limited in the present application.

As shown in FIGS. 12 to 15, in some examples, the rotary portion 243 includes a rotary shaft 243b. One end of the rotary shaft 243b is fixedly connected to the gripping handle 241, and the other end of the rotary shaft 243b is movably connected to the connecting rod 242. In addition, the rotary shaft 243b is rotatable relative to the connecting rod 242. The rotary shaft 243b is rotatable about a third axis in the radial direction of the rotary shaft 243b. The third axis is the rotation axis 243a. When the user operates the gripping handle 241 to rotate along the left and right direction (along the clockwise direction or the counterclockwise direction), the whole constituted by the first grip 241a and the second grip 241b may rotate with the rotary shaft 243b about the rotation axis 243a relative to the connecting rod 242. In this example, the rotary shaft 243b can drive the whole gripping handle 241 to rotate, and the structure is simple and easy to implement and reduces costs.

As shown in FIGS. 12 to 15, in some examples, the rotary shaft 243b is disposed in the region formed by the two connecting rods 242, and the rotation axis 243a is located in the region formed by the two connecting rods 242. In some examples, the rotary shaft 243b is disposed at an intermediate position of the region formed by the two connecting rods 242, and the rotation axis 243a of the rotary shaft 243b is located at the intermediate position of the region formed by the two connecting rods 242 and is parallel to the first straight line 242a along which the connecting rods 242 extend. In this example, the rotary shaft 243b is disposed in the region formed by the connecting rods 242 so that the center of gravity of the handle device 240 of the walk-behind power tool 200 can be lowered, and the user rotates the gripping handle 241 more stably.

In some examples, the walk-behind power tool 200 further includes a sensing device and a control device, and the sensing device is connected to the control device. The sensing device is mounted in the housing of a control panel fixed to an end portion of the connecting rod 242, and an end portion of the rotary shaft 243b is mounted with a trigger member corresponding to the sensing device. The sensing device cooperates with the trigger member to sense the amount of movement of the gripping handle 241 and transmits the amount of movement to the control device after signal processing. The control device then controls the traveling assembly 230 to steer the walk-behind power tool 200. The angle by which the walk-behind power tool 200 steers is adjusted based on the amount of movement. In an example, when it is detected that the gripping handle 241 has the amount of movement relative to the body 210 in a first direction, the traveling assembly 230 of the walk-behind power tool 200 is correspondingly controlled to steer in the first direction, and when it is detected that the gripping handle 241 has the amount of movement relative to the body 210 in a second direction opposite to the first direction, the traveling assembly 230 of the walk-behind power tool 200 is correspondingly controlled to steer in the second direction. In some examples, the first direction may be a left side, and the second direction may be a right side.

As shown in FIG. 12, when the user pushes the walk-behind power tool 200 to work along a straight line on the ground, the gripping handle 241 is located at an initial position, which is referred to as an initial state of the gripping handle 241. In this case, the gripping handle 241 does not rotate, and the amount of rotation of the gripping handle 241 or the amount of movement of the gripping handle 241 is defined as 0. When the walk-behind power tool 200 needs to steer left (or make a U-turn to the left), the gripping handle 241 is rotated left about the rotation axis 243a of the rotary portion 243, and the state of the gripping handle 241 after the rotation is shown in FIG. 13. The sensing device detects a signal of the amount of movement of the gripping handle 241, and the signal of the amount of movement indicates a rotation direction of the gripping handle 241 and a rotation angle of the gripping handle 241. The control device converts the signal of the amount of movement into an angle control signal for controlling the traveling assembly 230 to steer left, and thus, the walk-behind power tool 200 turns left by a corresponding angle. With an increase in the rotation angle of the gripping handle 241, the angle by which the power tool turns also increases correspondingly. If the gripping handle 241 is rotated to be gradually reset (or the rotation angle decreases), the angle by which the walk-behind power tool turns left also decreases correspondingly. When the angle by which the walk-behind power tool turns left meets the requirement of the working condition, the rotation may be stopped, and the gripping handle 241 may be reset to return to the initial state. When the walk-behind power tool 200 needs to steer right (or make a U-turn to the right), the gripping handle 241 is rotated right about the rotation axis 243a of the rotary portion 243. The sensing device detects a signal of the amount of movement of the gripping handle 241, and the signal of the amount of movement indicates a rotation direction of the gripping handle 241 and a rotation angle of the gripping handle 241. The control device converts the signal of the amount of movement into an angle control signal for controlling the traveling assembly 230 to steer right, and thus, the walk-behind power tool 200 turns right by a corresponding angle. With an increase in the rotation angle of the gripping handle 241, the angle by which the power tool turns also increases correspondingly. If the gripping handle 241 is rotated to be reset (or the rotation angle decreases), the angle by which the walk-behind power tool turns right also decreases correspondingly. When the angle by which the walk-behind power tool 200 turns right meets the requirement of the working condition, the rotation may be stopped, and the gripping handle 241 may be reset to return to the initial state.

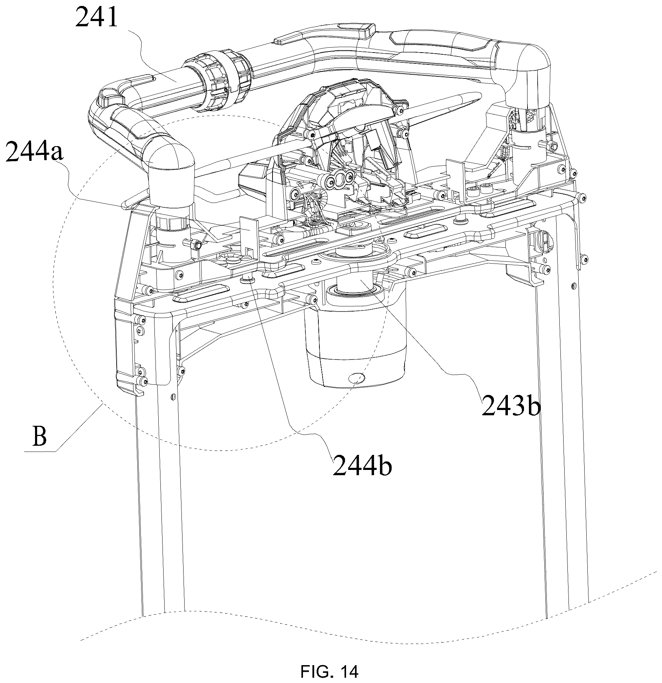

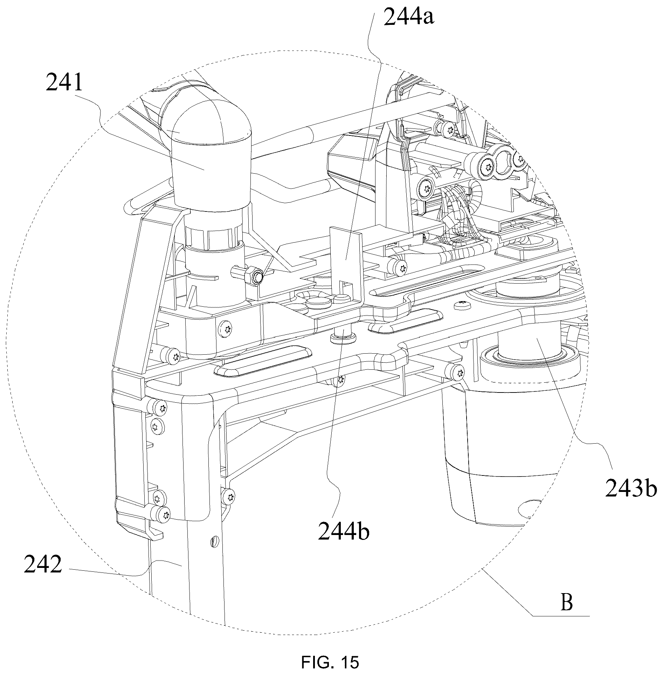

As shown in FIGS. 13 to 15, in some examples, a locking device 244 is further disposed on the handle device 240. The gripping handle 241 has an unlocked state in which the gripping handle 241 is movable relative to the body 210 and a locked state in which the gripping handle 241 is fixed relative to the body 210, and the locking device 244 may switch the gripping handle between the unlocked state and the locked state. In some examples, the locking device 244 may be a sliding structure and a locking structure. Referring to FIGS. 13 to 15, the locking device 244 includes a sliding plate 244a and a locking member 244b. One end of the locking member 244b is fixedly connected to the connecting rod 242. The sliding plate 244a is movably connected to the housing of the gripping handle 241. The sliding plate 244a has a first position and a second position to which the sliding plate 244a moves relative to the locking member 244b. When the sliding plate 244a is at the first position, as shown in FIGS. 14 and 15, the sliding plate 244a is engaged with and fixed to the locking member 244b, and then the gripping handle 241 is fixed to the connecting rod 242 so that the gripping handle 241 is in the locked state, that is, the walk-behind power tool works in the self-traveling straight-line mode. When the sliding plate 244a is at the second position, as shown in FIG. 13, the sliding plate 244a is disengaged from the locking member 244b, the rotary portion 243 can freely rotate, and the gripping handle 241 is in the unlocked state, that is, the walk-behind power tool works in the turning mode, and the walk-behind power tool is controlled to steer by rotating the gripping handle 241. In this example, the locking device 244 can limit the rotational movement of the rotary portion 243 and implement the switchover of the walk-behind power tool 200 between the self-traveling straight-line mode and the turning mode, thereby facilitating the flexible operation of the user.

In some examples, one end of the sliding plate 244a further includes a sliding portion for the user to operate so that it is convenient for the user to operate the locking device 244.

In some examples, the sensing device includes a magnetic encoding angle sensor, and the trigger member is a magnet fixedly mounted to the end portion of the rotary shaft 243b. When the user operates the gripping handle 241 to rotate, the magnet rotates relative to the magnetic encoding angle sensor fixed in the housing. Due to a change in magnetic induction, the magnetic encoding angle sensor detects the amount of rotational displacement, and the amount of rotational displacement is transmitted to the control device after signal processing. The control device controls the traveling assembly 230 to move and then controls the walk-behind power tool 200 to turn left or right.

This example provides a walk-behind power tool 300 as another example. The portions in the examples shown in FIGS. 1 to 8, the example shown in FIGS. 9 and 10, and the example shown in FIGS. 11 to 15 that are compatible with this example may be applied to this example, and only the differences in this example are described below.

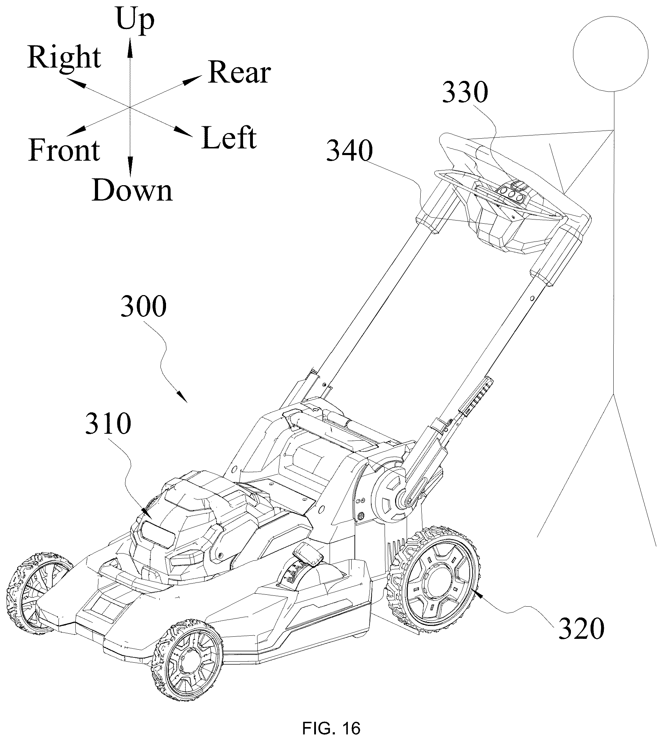

As shown in FIG. 16, in some examples, the walk-behind power tool 300 includes a body 310 and a traveling assembly 320. The body 310 is supported on the traveling assembly 320, and the traveling assembly 320 is used for enabling the walk-behind power tool to walk on lawns. The walk-behind power tool 300 also includes a sensing device 330 and a control device 340. The sensing device 330 can sense the amount of movement of a moving object. The sensing device 330 is connected to the control device 340. The control device 340 receives the amount of movement sensed by the sensing device 330 and controls, according to the amount of movement, the walk-behind power tool 300 to steer. In some examples, the moving object may be a body part of the user, such as the head or the hand, where the user may be the operator or a commander other than the operator. In some examples, the moving object may be the gripping handle in the preceding examples or another rotatable component of the walk-behind power tool.

In the process where the user uses the walk-behind power tool, the user expresses, through a change in a body action, a control signal indicating that the power tool is expected to steer. The sensing device 330 can identify the amount of movement of the change in the body action, and the control device 340 can control the traveling assembly 320 according to the amount of movement to cause the walk-behind power tool 300 to steer freely. Thus, it is unnecessary to operate specific buttons or components, the operation is convenient and flexible, and the walk-behind power tool 300 is safe and comfortable to use.

In some examples, the sensing device 330 may be a camera. The camera captures images of the user and identifies the amount of movement of each of changes in body actions within the images. In some examples, the amount of movement may be a change in a hand action of the user. When the sensing device 330 senses a wave of the left hand and the change amplitude of the action of the left hand, the control device 340 controls the walk-behind power tool 300 to turn left and rotate by an angle corresponding to the change amplitude. When the sensing device 330 senses a wave of the right hand and the change amplitude of the action of the right hand, the control device 340 controls the walk-behind power tool 300 to turn right and rotate by an angle corresponding to the amplitude. In some other examples, the amount of movement may be a change in a head action of the user. For example, the user turns the head to the left to control the walk-behind power tool 300 to turn left and turns the head to the right to control the walk-behind power tool 300 to turn right. In this example, the walk-behind power tool 300 is controlled, based on the amount of movement of the user's action, to freely steer, and the operation is convenient and flexible.

The technical solutions described in all the preceding examples may also be applied to a walk-behind electric camping cart.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A walk-behind power tool (100), comprising:
a body (110) supported by a traveling assembly (130);
a handle device (140), wherein the handle device is connected to the body and comprises gripping handles (141, 141', 241) for a user to hold, and at least part of the gripping handles are movable relative to the body;
a sensing device (150, 330) that senses an amount of movement of the at least part of the gripping handles; and
a control device (160, 340) connected to the sensing device;
wherein the control device controls, according to the amount of movement, the walk-behind power tool to steer.

2. The walk-behind power tool according to claim 1, further comprising a first motor (133) and a second motor (134), wherein the control device controls operation of the first motor and operation of the second motor separately.

3. The walk-behind power tool according to claim 2, further comprising a third motor (122) and a working member (121), wherein the third motor drives the working member to rotate, the traveling assembly comprises a first traveling wheel (131) and a second traveling wheel (132), and the first motor and the second motor drive the first traveling wheel and the second traveling wheel, respectively.

4. The walk-behind power tool according to claim 1, wherein the sensing device is movable relative to the at least part of the gripping handles.

5. The walk-behind power tool according to claim 1, wherein each gripping handle of the at least part of the gripping handles comprises a trigger portion (143), the trigger portion comprises a trigger member (143a), and the sensing device senses an amount of movement of the gripping handle by sensing an amount of movement of the trigger member.

6. The walk-behind power tool according to claim 1, wherein the sensing device comprises a sensor (151).

7. The walk-behind power tool according to claim 1, wherein the handle device comprises connecting rods (142, 242), one end of each of the connecting rods is connected to the body, the other end of each of the connecting rods is connected to a respective one of the gripping handles, the connecting rods extend substantially along a first straight line (142a, 142a', 242a), the at least part of the gripping handles are configured to rotate about a rotation axis (144a) relative to the connecting rods, and an included angle between the rotation axis and the first straight line is greater than or equal to 0 degrees and less than or equal to 30 degrees.

8. The walk-behind power tool according to claim 7, wherein the handle device further comprises a mounting housing (144c, 144c'), the mounting housing is fixedly connected to the connecting rods, and one end of each of the at least part of the gripping handles extends into the mounting housing and is rotatable about the rotation axis relative to the mounting housing.

9. The walk-behind power tool according to claim 1, wherein the handle device comprises connecting rods (142, 242), one end of each of the connecting rods is connected to the body, the other end of each of the connecting rods is connected to a respective one of the gripping handles, the connecting rods extend substantially along a first straight line (142a, 142a', 242a), the at least part of the gripping handles are configured to rotate about a rotation axis (144a) relative to the connecting rods, and an included angle between the rotation axis and the first straight line is greater than or equal to 60 degrees and less than or equal to 90 degrees.

10. The walk-behind power tool according to claim 9, wherein the handle device further comprises a rotary assembly (144), a fixed end of each of the gripping handles is connected to one end of the rotary assembly, and another end of the rotary assembly is movably connected to a respective one of the connecting rods and is rotatable about the rotation axis relative to the respective connecting rod.

11. The walk-behind power tool according to claim 1, wherein the gripping handles comprise a first gripping handle (141a', 141a) and a second gripping handle (141b, 141b'), the sensing device comprises a first sensing device and a second sensing device, the first sensing device senses an amount of movement of the first gripping handle, and the second sensing device senses an amount of movement of the second gripping handle.

12. The walk-behind power tool according to claim 1, wherein the gripping handles comprise a first gripping handle (141a', 141a) and a second gripping handle (141b, 141b'), and the sensing device senses an amount of movement of the first gripping handle or an amount of movement of the second gripping handle.

13. The walk-behind power tool according to claim 1, further comprising a locking device (244), wherein each gripping handle of the at least part of the gripping handles has an unlocked state in which the gripping handle is movable relative to the body and a locked state in which the gripping handle is fixed relative to the body, and the locking device switches the gripping handle between the unlocked state and the locked state.

14. The walk-behind power tool according to claim 1, further comprising a display screen (145) disposed on the handle device.

15. The walk-behind power tool according to claim 14, wherein the display screen displays at least one of a steering direction and a steering angle.
